# EUROPEAN PATENT SPECIFICATION

(11) **EP 1 973 268 B1**
(45) Date of publication and mention of the grant of the patent: **09.11.2011**
(21) Application number: 07104688.2
(22) Date of filing: 22.03.2007
(51) Int. Cl.: H04L 12/24, H04L 29/08

(54) **Data retrieval**
Datenwiederauffindung
Récupération de données

(43) Date of publication of application: 24.09.2008
(73) Proprietor: PacketFront International AB, 164 40 Kista (SE)
(72) Inventor: Lundström, Magnus, Johanneshov 12152 (SE)
(74) Representative: Andrews, Martyn Peter

(56) References cited:
- US-A- 5 913 037
- US-A1- 2006 026 228
- US-B1- 7 082 463

## Description

### Technical Field

This invention relates to the recovery of data relating to the operation of network systems. In particular, it relates to techniques for obtaining status and operational data about various parts of the network. The preferred networks to which the invention applies are broadband networks that can provide open access, triple-play services to customers.

### Background Art

One current form of data retrieval in networked system such as broadband networks uses the simple network management protocol (SNMP). SNMP forms part of the Internet protocol suite as defined by the Internet Engineering Task Force (IETF) and is used by network management systems to monitor network-attached devices for conditions that warrant administrative attention. It consists of a set of standards for network management, including an Application Layer protocol, a database schema, and a set of data objects.

SNMP provides an extensible design by use of management information bases (MIBs), which specify the management data of a device subsystem, using a hierarchical namespace containing object identifiers, implemented via ASN.1. The MIB hierarchy can be depicted as a tree with a nameless root, the levels of which are assigned by different organisations. This model permits management across all layers of the OSI reference model, extending into applications such as databases, email, and the Java EE reference model, as MIBs can be defined for all such area-specific information and operations.

A MIB is a collection of information that is organised hierarchically. MIBs are accessed using a network-management protocol such as SNMP. They comprise managed objects and are identified by object identifiers.

A managed object (sometimes called a MIB object, an object, or a MIB) is one of any number of specific characteristics of a managed device. Managed objects comprise one or more object instances, which are essentially variables.

Two types of managed objects exist:
1 Scalar objects define a single object instance.
2 Tabular objects define multiple related object instances that are grouped in MIB tables.

An example of a managed object is atlnput, which is a scalar object that contains a single object instance, the integer value that indicates the total number of input AppleTalk packets on a router interface.

An object identifier (or object ID or OID) uniquely identifies a managed object in the MIB hierarchy. The MIB hierarchy can be depicted as a tree with a nameless root, the levels of which are assigned by different organisations. The top-level MIB object IDs belong to different standards organisations, while lower-level object IDs are allocated by associated organisations.

In telecommunications and computer networking, Abstract Syntax Notation One (ASN.1) is a standard and flexible notation that describes data structures for representing, encoding, transmitting, and decoding data. It provides a set of formal rules for describing the structure of objects that are independent of machine-specific encoding techniques and is a precise, formal notation that removes ambiguities.

An SNMP-managed network consists of three key components:
1. Managed devices
2. Agents
3. Network-management systems (NMSs).

A managed device is a network node that contains an SNMP agent and that resides on a managed network. Managed devices collect and store management information and make this information available to NMSs using SNMP. Managed devices, sometimes called network elements, can be routers and access servers, switches and bridges, hubs, computer hosts, or printers.

An agent is a network-management software module that resides in a managed device. An agent has local knowledge of management information and translates that information into a form compatible with SNMP.

An NMS executes applications that monitor and control managed devices. NMSs provide the bulk of the processing and memory resources required for network management. One or more NMSs must exist on any managed network.

The SNMP framework consists of master agents, subagents and management stations.

A master agent is a piece of software running on an SNMP-capable network component, for example a router that responds to SNMP requests from the management station. Thus it acts as a server in client-server architecture terminology or as a daemon in operating system terminology. A master agent relies on subagents to provide information about the management of specific functionality. Master agents can also be referred to as managed objects.

A subagent is a piece of software running on an SNMP-capable network component that implements the information and management functionality defined by a specific MIB of a specific subsystem, for example the Ethernet link layer. Some capabilities of the subagent are:
■ Gathering information from managed objects
■ Configuring parameters of the managed objects
■ Responding to managers' requests
■ Generating alarms or traps

The manager or management station is the final component in the SNMP architecture. It functions as the equivalent of a client in the client-server architecture. It issues requests for management operations on behalf of an administrator or application and receives traps from agents as well.

One disadvantage of SNMP is that a MIB is essential for its operation. Anything that is not in the MIB cannot be handled so it is essential to keep the MIB up to date for data to be retrieved effectively. Examples of systems using MIBs and SNMP can be found in US5913037 and US7082463. US2006/0026228 discloses a device management system based around a device management tree.

An object of this invention is to provide a data retrieval system that does not rely on a MIB or equivalent structure.

### Disclosure of the invention

One aspect of the invention comprises a method for retrieving data from a network comprising network elements organised as a multi-level hierarchical tree, each level comprising a set of nodes, the method comprising:
- providing a data exchange interface defining formats for requesting and delivery of types of data to be retrieved;
- generating a request at the data exchange interface to define the data to be retrieved;
- using the request to define
   - a canonical name that comprises a series of element names corresponding to at least part of the hierarchical tree containing the network element or elements from which the data is to be retrieved; and
   - a depth indicator indicating the number of levels below the lowest level element name;
- implementing, at one or more levels in the network, a data retrieval routine that uses the canonical name to generate a command that is issued to the element or elements from which data are to be retrieved to cause the element or elements to return data comprising a description and a value; and
- communicating the returned data to the data exchange interface in the defined data format.

In one embodiment, the method can comprise generating a request for real time data, to be delivered either immediately or at some pre-determined time in the future.

In another embodiment, the request defines a period over which data are to be retrieved and a frequency at which data are to be retrieved.

It is particularly preferred that the method comprises time-stamping the delivered data.

### Brief description of the drawings

Figure 1 shows a generic broadband network;
Figure 2 shows a functional block diagram of a network; and
Figure 3 shows a system suitable for implementing the invention.

### Mode(s) for carrying out the invention

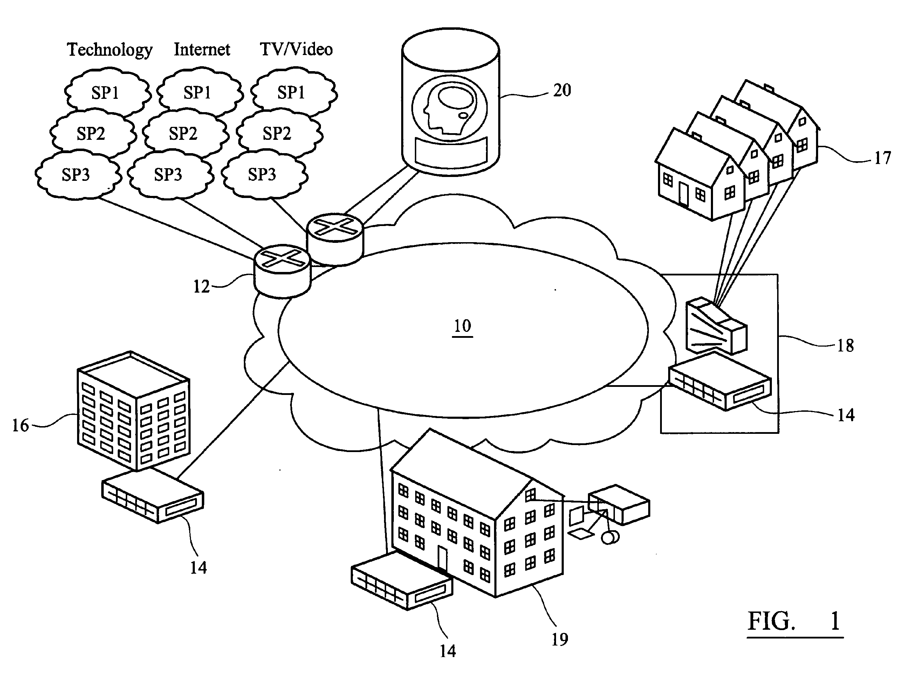

Figure 1 shows a generic description of a broadband network for providing telephone, internet and TV/video services to subscribers in a number of locations. A series of service providers provide the various services (SP1, SP2, SP3) to the network 10 via conventional access points 12. The network 10 connects these to subscribers via routers 14 located close to the subscribers. These can include business locations that can include routers in commercial property 16, and domestic subscribers with routers located in a central office 18 for a neighbourhood of separate dwellings (houses 17), or in a single building 19 such as an apartment building.

Operation of the network is controlled by a control and provisioning system 20 that configures the various elements of the network to operate in the desired manner.

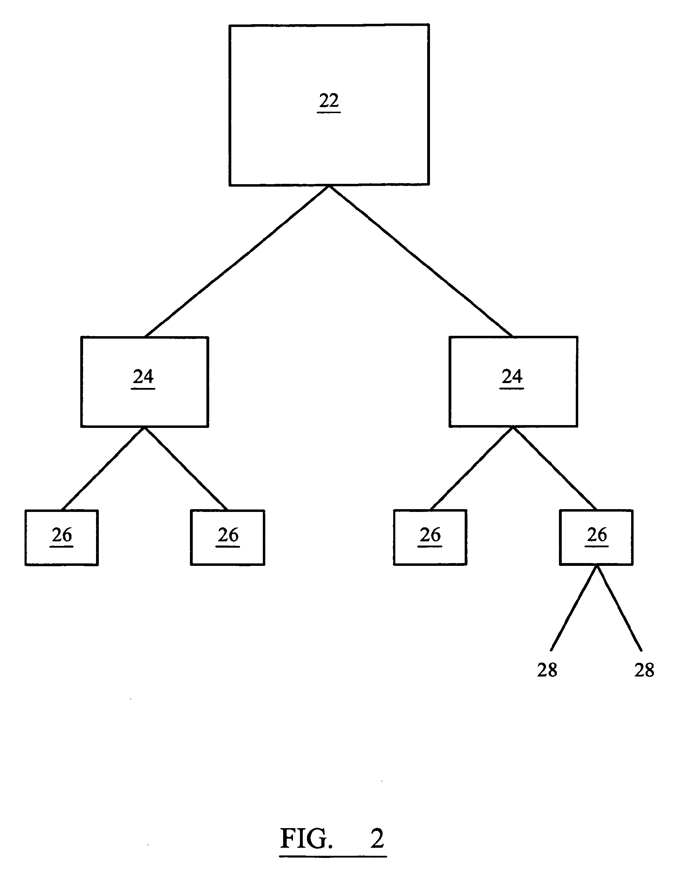

For the function of the control and provisioning system 20, the network can be considered in an abstract way as comprising a core 22 having one or more cells 24, each cell having one or more network elements 26 as is shown in Figure 2. Subscribers 28 connect to the network elements 26. This structure is not to be confused with the physical elements making up the network. The functional blocks 22, 24, 26 may be wholly or partly resident in the same or different physical elements, depending on the exact size and makeup of the network in question, although typically, each network element 26 will comprise a router.

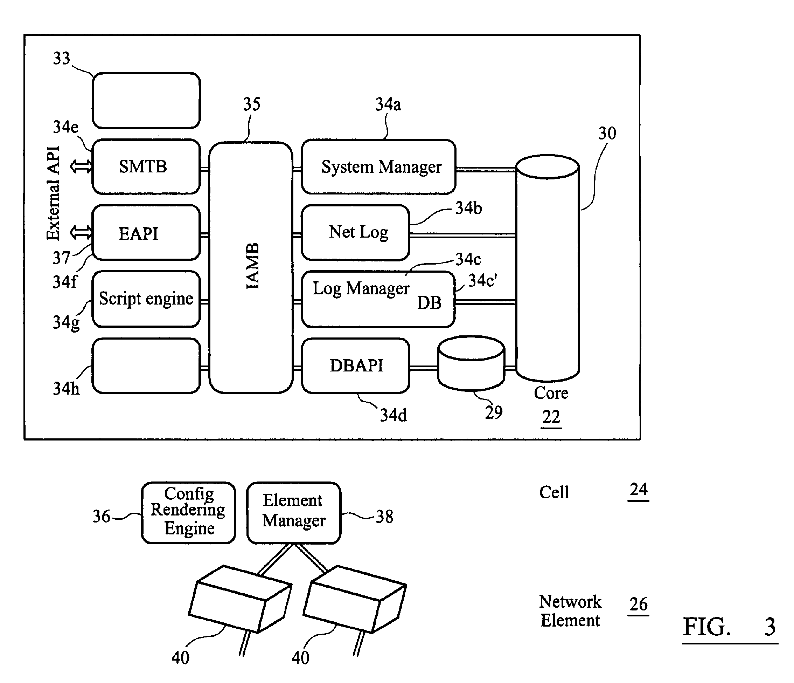

Figure 3 shows a system suitable for implementing the invention. This system is described in more detail in European patent application EP1780941. The core 22 comprises a file system 30, a database 32, a core module element manager 33, and a set of modules 34a-h that provide the core services for the network. The file system 30, database 32 and modules 33, 34 are all located on a central server, although it is possible that the various components could be distributed over more than one server. The core modules 34 interact with each other, the cells 24 and network elements 26. The core 22 also interacts with external applications such as service provider systems via an external API 37. The core modules 34 comprise a system manager module 34a, a net log module 34b, a log manager module 34c, a database application interface 34d, a subscriber management tool bridge 34e, an external application interface 34f, a script engine 34g, and a configuration job manager 34h. The various core modules 34 communicate with each other via an inter-application message bus 35. Each cell 24 comprises modules that handle that part of the network topology in that cell. The cell 24 can be located on the same server as the core 22, but in the case of a large network, the cell 24 may be separated from the core server and deployed in the network. Each cell includes a configuration rendering engine module 36 and an element manager module 38. Each network element 26 typically comprises a programmable router 40.

In a broadband network such as that described above, there are huge amounts of information that can be made available and used for various purposes, such as:
Billing
Troubleshooting
SLA monitoring.

As will be described below, the present invention allows data to be retrieved with a generic request. This minimises the dependencies on the version of the operating system currently used. The data are requested by scripts or third party applications through the EAPI 34f and forwarded by the element manager 38 to the specific element 40. The data are then returned to the requester in a self-explanatory format.

The generic data retrieval (gdr) methods of the invention can comprise real-time data retrieval (rdr) and statistical data retrieval (sdr) and is based on a canonical name addressing approach (cname).

rdr is a framework used by applications connected to the system, or by the system itself, to retrieve (and potentially execute or set) live data from either a network element 40 or a system application. rdr can be used for troubleshooting and real-time information gathering.

sdr is a framework used by applications connected to the system, or by the system itself, to retrieve statistical data records measured over time. sdr also offers data derived from some basic statistical data operations.

cname is a canonical naming scheme for data record entities that is used in these methods. All gdr entities in methods according to the invention are addressed and referenced through the cname format. The gdr data format is a self-explaining format, containing a known data type for each entity and record. Thus data returned include a description of what they are as well as their values, the cname scheme identifying the location in the network from which the data are obtained.

In the embodiment of the invention considered here, the cname addressing format is a pointer ("->") separated string of string tokens, which may be truncated from a known point (such as an object), wildcarded (to enumerate child entries), or used in its entirety. Various examples are given below with examples based on the PacketFront BECS and iBOS systems (BECS and iBOS names and commands are indicated in italics below). Other systems may use different naming conventions provided that the same concepts are embodied.

The cname for the PacketFront BECS core installation at MSN is: *com->packetfront->becs->msn*

The cname for one of MSN's elements having an oid of 4801 is: *com->packetfront->becs->msn->element->4801*

The cname for the received byte count ('*rxbytes*') on a particular customer interface (in this case interface *'fastethernet7'*)on this element is: *com->packetfront->becs->msn->element->4801->interface fastethernet7->rxbytes*

The cname may be truncated down to the lowest level for which an oid is known to the application requesting the data. For example in the case above, if the requesting application is provided with the oid for the element of interest (4801) such that the request can be made directly to that element, the cname becomes: *interface fastethernet7->rxbytes*

Still further truncation is possible in the same manner if the interface oid is known:
*rxbytes*

A cname may also address service's output packets on the same port: com->packetfront->becs->msn->element->4801->interface fastethernet7->service->inetgold->txpackets

By the same logic as above, if the interface oid is known, the cname can be truncated to:
service->inetgold->txpackets

Ultimately, from the SA (service attach) oid, the truncation is:
txpackets

Each level of the cname is part of a hierarchical tree, where each level is a set of components, and each component has a specific name and type (and descriptive text, if available). For example:
com->packetfront->becs->msn->element->4801->interface fastethernet7->service->inetgold->txpackets
The hierarchical tree structure of this information is explained in more detail in EP1780941 which describes one particularly preferred embodiment of an organisation that can also be used in this information.

The table below gives examples of component names (Component name), their types (Type) and a brief description (Description):

**Table 1**

| Component name | Type | Description |
|---|---|---|
| *com* | Node | com root node |
| *packetfront* | Node | PacketFront's root node |
| *becs* | Node | BECS installations |
| *msn* | String | Customer BECS installation |
| *element* | Node | MSN Elements |
| *4801* | uint64 | Element oid |
| *interface fastethernet7* | String | Element context name |
| *service* | Node | Interface services |
| *inetgold* | String | Service name |
| *txpackets* | Counter | Transmitted packets |

Examples of component types that can be used in a cname are given in the table below (others may also be possible) :

**Table 2**

| Type | Description |
|---|---|
| *Node* | Hierarchical level |
| *String* | Variable string, what it means depends on its parent Node |
| *Counter* | Counter (i.e., number of packets in (rxpackets)) |
| *Gauge* | Gauge (i.e., current bitrate (us_rate) |
| *IPv4* | IPv4 address |
| *Prefix4* | IPv4 network prefix |

An external application requests rdr data by calling an appropriate EAPI method via the EAPI interface 34f. The element manager 38 verifies that all *cnames* in the request are accessible by the caller's namespace. Each granted *cname* is then passed on to the element 40, along with a *rdrid* (rdr transaction id) unique to this specific rdr request.

The element 40 parses the *cname* and converts the *cname* to a command. The command is then executed and the command *callback* provides the gathered data either as a single message or a stream of smaller messages. The data is tagged with the *rdrid* and sent up to the element manager 38, which enqueus it in an *rdrid-*specific poll queue, waiting for the calling application to collect the retrieved data.

Each rdr request contains the following information for each *cname*: *cnames*[1..N] = {{ *cname = <string>, [depth = <0-100000000>]*}, .. } Where each *cname* is bundled with an optional maximum depth level, telling rdr how far it should descend while collecting data entries.

The following tree can be used to illustrate this:
service
freevoip
txbytes
rxbytes
inetgold
txbytes
rxbytes
txbytes
rxbytes

If an rdr request is made for { *"service", depth=* 1 }, only the immediate sublevel (i.e., a depth of 1) is returned to the requesting application:
*service->freevoip*
*service->inetgold*
*sefvice->defsurf*

If no-depth value is provided, the entire sub tree is returned:
service->freevoip->rxbytes
service->freevoip->txbytes
service->inetgold->rxbytes
service->inetgold->txbytes
service->defsurf->rxbytes
service->defsurf->txbytes

If depth is set to 0, only the level itself is returned:
service

Hence depth can be used to enumerate available subnodes, such as services under an interface, as in the example above.

Each rdr request may contain a single start time, or execution time, for when the requested cnames are to be gathered. This could, for example, be useful if the application wants to obtain a certain counter value exactly at 16:15:00. If a start time is omitted, the requested cnames are retrieved as soon as possible.

All rdr data entries returned to the application are time-stamped by the element 40. This is called the sourcetime. The data entries are also time-stamped by the element manager 38, this is called the receivetime. If start time, sourcetime and/or receivetime are to be used and/or calculated upon, it is important that the three parties (element 40, element manager 38, application) have synchronised clocks (for example via NTP or some similar protocol).

An example of a method format used in accordance with the invention is as follows:
Input:
Input:
cnames[1..N] = { {cname, [depth]}, .. }
[starttime]
Output:
data[1..N] = {<data entry format>}

The data entry format can be, for example:
cname: String
data: Union of data types, also describing which data type is used sourcetime: Timestamp
receivetime: Timestamp

It will be appreciated that other conventions can be used to achieve the same overall result.

## Claims

1. A method for retrieving data from a network comprising network elements (26) organised as a multi-level hierarchical tree, each level comprising a set of nodes, the method comprising:
- providing a data exchange interface (34f) defining formats for requesting and delivery of types of data to be retrieved;
- generating a request at the data exchange interface to define the data to be retrieved; and
- communicating returned data to the data exchange interface in the defined data format.
**characterised in that** the method further comprises using the request to define
- a canonical name that comprises a series of element names corresponding to at least part of the hierarchical tree containing the network element or elements from which the data is to be retrieved; and
- a depth indicator indicating the number of levels below the lowest level element name; and
- implementing, at one or more levels in the network, a data retrieval routine that uses the canonical name to generate a command that is issued to the element or elements (26) from which data are to be retrieved to cause the element or elements (26) to return data comprising a description and a value.

2. A method as claimed in claim 1, comprising generating a request for real time data, to be delivered either immediately or at some pre-determined time in the future.

3. A method as claimed in claim 1 or 2, comprising defining a period over which data are to be retrieved and a frequency at which data are to be retrieved and retrieving and delivering data at the defined frequency during that period.

4. A method as claimed in claim 1, 2 or 3, further comprising time-stamping the delivered data.

## Patentansprüche

1. Verfahren zum Abrufen von Daten von einem Netz, das Netzelemente (26) umfasst, die als mehrstufiger hierarchischer Baum organisiert sind, wobei jede Stufe einen Satz von Knoten umfasst, wobei das Verfahren Folgendes umfasst:
- Bereitstellen einer Datenaustausch-Schnittstelle (34f), die Formate zum Anfordern und Zustellen von Arten von abzurufenden Daten definiert;
- Erzeugen eine Anforderung an der Datenaustausch-Schnittstelle, die abzurufenden Daten zu definieren; und
- Übermitteln zurückgegebener Daten an die Datenaustausch-Schnittstelle in dem definierten Datenformat
**dadurch gekennzeichnet, dass** das Verfahren weiter die Verwendung der Anforderung zum Definieren des Folgenden umfasst:
- einen kanonischen Namen, der eine Reihe von Elementnamen umfasst, die mindestens einem Teil des hierarchischen Baums entspricht, der die Netzelemente bzw. das Netzelement enthält, von denen die Daten abzurufen sind; und
- einen Tiefenindikator, der die Zahl von Stufen unter dem Elementnamen mit der tiefsten Stufe angibt; und
- Implementieren, auf einer oder mehreren Stufen in dem Netz, einer Datenabrufroutine, die den kanonischen Namen verwendet, um einen Befehl zu erzeugen, der an das Element bzw. die Elemente (26) ausgegeben wird, von denen Daten abzurufen sind, um das Element bzw. die Elemente (26) dazu zu veranlassen, eine Beschreibung und einen Wert umfassende Daten zurückgegebener.

2. Verfahren nach Anspruch 1, umfassend das Erzeugen einer Anforderung dafür, dass Echtzeitdaten entweder sofort oder zu einem vorherbestimmten Zeitpunkt in der Zukunft zugestellt werden.

3. Verfahren nach Anspruch 1 oder 2, umfassend das Definieren eines Zeitraums, in dem Daten abzurufen sind und einer Häufigkeit, mit der Daten abzurufen sind und Abrufen und Zustellen von Daten mit der definierten Häufigkeit während dieses Zeitraums.

4. Verfahren nach Anspruch 1, 2 oder 3, weiter umfassend das Versehen der zugestellten Daten mit einem Zeitstempel.

## Revendications

1. Procédé pour récupérer des données d'un réseau comprenant des éléments de réseau (26) organisés sous la forme d'un arbre hiérarchique à multiples niveaux, chaque niveau comprenant un jeu de noeuds, le procédé comprenant les étapes consistant à :
- mettre en oeuvre une interface d'échange de données (34f) définissant des formats pour demander et délivrer des types de données à récupérer ;
- générer une demande à l'interface d'échange de données pour définir les données à récupérer ; et
- communiquer les données renvoyées à l'interface d'échange de données dans le format de données défini.
**caractérisé en ce que** le procédé comprend en outre l'utilisation de la demande pour définir un nom canonique qui comprend une série de noms d'éléments correspondant à au moins une partie de l'arbre hiérarchique contenant le ou les éléments de réseau dont les données sont à récupérer ; et
- un indicateur de profondeur indiquant le nombre de niveaux en dessous du nom de l'élément du niveau le plus bas ; et
- mettre en oeuvre, à un ou plusieurs niveaux dans le réseau, un programme de récupération de données qui utilise le nom canonique pour générer une commande qui est délivrée au(x) élément (s) (26) dont les données sont à récupérer pour amener le ou les éléments (26) à renvoyer des données comprenant une description et une valeur.

2. Procédé selon la revendication 1, comprenant la génération d'une demande de données en temps réel à délivrer soit immédiatement, soit à un certain moment prédéterminé dans le futur.

3. Procédé selon la revendication 1 ou 2, comprenant la définition d'une période sur laquelle les données doivent être récupérées et une fréquence à laquelle les données doivent être récupérées et la récupération et la délivrance de données à la fréquence définie pendant cette période.

4. Procédé selon la revendication 1, 2 ou 3, comprenant en outre l'horodatage des données délivrées.
